# EUROPÄISCHE PATENTSCHRIFT

(11) **EP 3 621 854 B1**
(45) Veröffentlichungstag und Bekanntmachung des Hinweises auf die Patenterteilung: **06.10.2021**
(21) Anmeldenummer: 19724357.9
(22) Anmeldetag: 25.04.2019
(51) Int. Cl.: B60R 13/02, B23K 26/0622

(54) **HINTERLEUCHTBARE DEKORFLÄCHE, INSBESONDERE FÜR DEN INNENAUSBAU VON KRAFTFAHRZEUGEN**
BACKLIT DECORATIVE SURFACE, PARTICULARLY FOR THE INTERIOR FINISHING OF MOTOR VEHICLES
SURFACE DÉCORATIVE POUVANT ÊTRE RÉTRO-ÉCLAIRÉE, DESTINÉE EN PARTICULIER À L'AMÉNAGEMENT INTÉRIEUR DE VÉHICULES AUTOMOBILES

(30) Priorität: 08.05.2018 DE 102018111072
(43) Veröffentlichungstag der Anmeldung: 18.03.2020
(73) Patentinhaber: Eissmann Automotive Deutschland GmbH, 72574 Bad Urach (DE)
(72) Erfinder: TOPP, Jennifer, 72793 Pfullingen (DE); EITEL, Norman, 72800 Eningen (DE)
(74) Vertreter: Mammel und Maser
(86) Internationale Anmeldenummer: PCT/EP2019/060594
(87) Internationale Veröffentlichungsnummer: WO 2019/214957

(56) Entgegenhaltungen:
- EP-A1- 2 295 293
- EP-A2- 2 060 443
- WO-A1-2005/049261
- DE-A1-102013 202 223
- DE-A1-102016 105 567
- DE-A1-102017 100 512
- DE-B3-102008 054 721
- DE-B3-102013 104 138
- DE-U1-202012 100 538
- DE-U1-202017 100 781

## Beschreibung

Die vorliegende Erfindung betrifft eine hinterleuchtbare Dekorfläche, insbesondere für den Innenausbau von Kraftfahrzeugen.

Auf dem Gebiet der Innenausstattung von Fahrzeugen ist es üblich, Trägerteile wie Instrumententafeln, Türinnenverkleidungen, Fahrzeughimmel oder Mittelkonsolen mit flächigen Dekormaterialien wie Leder, Kunstleder oder Alcantara oder anderen Textilien zu kaschieren. Häufig wird das flächige Dekormaterial nicht direkt auf das Trägerteil kaschiert, sondern zwischen Trägerteil und Dekormaterial ein Abstandsgewirke oder Schaumstoff vorgesehen, um einen ansprechenden haptischen Eindruck zu vermitteln.

Für die Verklebung der Schichten werden im Allgemeinen Lösemittel-, Dispersions- oder Hotmeltklebstoffe eingesetzt.

In den letzten Jahren hat sich ein Trend zu hinterleuchtbaren Flächen entwickelt. Hierbei wird grundsätzlich auf ein Trägermaterial ein Lichtleiter aufgebracht, der mit einer Lichtquelle wie einer LED-Lampe beleuchtet wird. Oberhalb des Lichtleiters ist eine wenigstens teilweise transparente Schicht vorgesehen. Im Nachtbetrieb, also wenn die Lichtquelle eingeschaltet ist, wird das Licht von der Lichtquelle durch den Lichtleiter geleitet und tritt dann an den für das Licht durchlässigen Stellen der teilweise transparenten Schicht durch diese Schicht hindurch und in den Kraftfahrzeuginnenraum. Um eine gleichmäßige räumliche Lichtverteilung zu erreichen, wird häufig zwischen dem Lichtleiter und der teilweise lichtdurchlässigen Schicht ein Diffusor vorgesehen.

Mit solchen hinterleuchteten oder hinterleuchtbaren Flächen kann, insbesondere bei Dunkelheit, eine ansprechende Grundbeleuchtung im Fahrzeuginnenraum erzielt werden, die bei Helligkeit nahezu unsichtbar ist.

Im Bereich der gehobenen Fahrzeuginnenausstattung besteht der Wunsch, auch hinterleuchtete Flächen mit hochwertigen nicht transparenten oder translucenten Dekormaterialien wie Leder oder Kunstleder bereitzustellen. Nachdem solche Dekormaterialien nicht transparent oder nicht translucent sind, ist es erforderlich, in diese Materialien Löcher oder Perforationen einzubringen, damit das Licht in dem Lichtleiter auf der Rückseite des Dekormaterials durch das Dekormaterial auf die Sichtseite hindurchtreten kann.

Wenn jedoch in das Dekormaterial Löcher oder Perforationen eingebracht werden und anschließend Klebstoff auf die Rückseite des Dekormaterials aufgebracht wird, um dieses mit dem Diffusor oder Lichtleiter zu verkleben, dringt ein Teil des Klebstoffs in die Löcher oder Perforationen in dem Dekormaterial ein. Nachdem sich der Klebstoff teilweise in einer Perforation zwischen dem Lichtleiter und der Sichtseite befindet und somit auch der Klebstoff "hinterleuchtet" wird, ist er zum einen von der Sichtseite des Dekormaterials aus sichtbar, was unschön aussieht. Zum anderen bewirkt die unterschiedliche Menge und Verteilung des Klebstoffs in den Perforationen jedoch auch, dass die Intensität und Verteilung des durch die Perforation transmittierten Lichts von Perforation zu Perforation schwankt, so dass keine gleichmäßige Beleuchtung erzielt wird.

Ein weiterer Nachteil besteht darin, dass das Dekormaterial, insbesondere Leder, insbesondere, wenn eine Vielzahl von Perforationen in einem bestimmten Muster eingebracht werden, zunehmend an Stabilität verliert, so dass das Dekormaterial dazu neigt, sich zu verziehen und so das gewünschte Perforationsmuster nicht mehr ohne Störungen auf den Lichtleiter aufgeklebt werden kann.

Weiterhin ist es wünschenswert, dass die Herstellung solcher hinterleuchteten Dekormaterialien die Anforderungen eines Produktionsprozesses in einer industriellen Serienfertigung erfüllt.

Aus der DE 20 2012 100 538 U1 ist ein Verkleidungsteil mit Perforationen bekannt, das aus einem Träger und einer Dekorschicht aus Holz besteht. Nachdem die Perforationen in den Verbund mittels eines UV-Lasers eingebracht werden und die Perforationen nur in der Dekorschicht, nicht jedoch im Trägermaterial verlaufen sollen, ist zwischen dem Träger und der Dekorschicht ein UV-Reflektor vorgesehen, der einen Eintritt des UV-Lichts während des Laserns in den Träger verhindern soll.

Die DE 10 2013 104 138 B3 lehrt ein Verfahren zur Einbringung einer Schwächungslinie durch Materialabtrag an einem fasrigen Überzugsmaterial.

Die DE 10 2008 054 721 B3 lehrt ein Verfahren zur Herstellung eines lichtstreuenden Dekorverbunds, bei dem auf die Sichtseite einer Dekorschicht eine transparente Deckschicht aufgebracht wird und der Verbund anschließend von der Rückseite des Dekorverbunds aus perforiert wird. Aus der DE 10 2013 202 223 A1 ist eine Dekorschicht mit einer oder mehreren Öffnungen bekannt, auf die eine Folie aufgebracht wird und die Folie derart umgeformt wird, dass sie zumindest teilweise in die eine oder mehreren Öffnungen eindringt und diese auskleidet. Diese Dekorschicht entspricht dem Oberbegriff des Anspruchs 1.

Die DE 10 2017 100 512 A1 lehrt ein Innenausstattungsteil mit integriertem Bildschirm, das eine Dekorschicht mit einem Perforationsabschnitt aufweist.

Die DE 20 2017 100 781 U1 betrifft ein Formteil, das als Dekor- oder Verkleidungsteil ausgebildet ist und eine Dekorschicht aus einem Holzfurnier mit einer Vielzahl von Aussparungen umfasst, die sich durch die Dekorschicht erstrecken, so dass von der Sichtseite des Formteils aus der dahinterliegende Träger sichtbar ist.

Ein Verfahren zum Einbringen von Schwächungslinien in ein Fahrzeuginnenverkleidungsteil mit einer Dekorschicht aus Leder ist auch aus der WO 2005/049261 A1 bekannt.

Die DE 10 2008 054721 B3 betrifft ein Verfahren zur Herstellung eines hinterleuchtbaren Dekormaterials gemäß dem Oberbegriff des Anspruchs 9.

Die Aufgabe der vorliegenden Erfindung besteht darin, ein hinterleuchtbares Dekormaterial bereitzustellen, das eine optisch ansprechende, definierte Durchleuchtung aufweist und gleichzeitig die Anforderungen eines Produktionsprozesses in der industriellen Serienfertigung erfüllt. Ebenfalls ist Aufgabe der vorliegenden Erfindung, ein diesbezügliches Herstellungsverfahren anzugeben.

Diese Aufgabe wird durch die Merkmale des Anspruchs 1 und 10 gelöst. Das erfindungsgemäße flächige Dekormaterial weist Perforationen auf und dient dazu, auf seiner rückwärtigen Seite mit einer Leuchtvorrichtung beleuchtet zu werden und einen Teil des Lichts der Leuchtvorrichtung von der Rückseite des Dekormaterials durch die Perforationen zur Sichtseite des Dekormaterials durchtreten zu lassen, wobei auf der Rückseite des Dekormaterials eine Folie klebt und sich die Perforationen durch das gesamte Dekormaterial bis zu dessen Sichtseite, nicht jedoch durch die Folie erstreckt.

Dadurch, dass die Folie auf der Rückseite des Dekormaterials klebt, wird durch die Folie eine Stabilisierung und eine Fixierung des Dekormaterials, das eine Vielzahl von Perforationen für die Durchleuchtung ausweist, bewirkt. Nachdem die Folie in dem nachfolgend beschriebenen Prozess erst auf die Rückseite des Dekormaterials aufgeklebt und erst dann die Perforationen in das Dekormaterial, nicht jedoch in die Folie, eingebracht werden, kann sich das Dekormaterial mit den Perforationen während des Herstellungsprozesses gegenüber der Folie nicht verziehen. Die Folie stabilisiert den gesamten Verbund.

Würden die vielen Perforationen zunächst in das Dekormaterial, insbesondere Leder, eingebracht und das perforierte Dekormaterial erst dann auf die Folie aufgeklebt, so würde sich das labile perforierte Dekormaterial nicht völlig störungsfrei und ohne jede Dehnung oder jeden Zug auf die Folie kleben lassen, was aus optischen Gründen unerwünscht wäre. Zudem könnte Klebstoff in die Perforationen eindringen.

Die Folie, die direkt auf die Rückseite des Dekormaterials aufgeklebt wird, bewirkt nicht nur eine Stabilisierung des perforierten Dekormaterials, sondern wirkt auch als Diffusor für das Licht der Leuchtvorrichtung, das durch die Folie und dann durch die Perforation im Dekormaterial hindurchtritt und anschließend an der Sichtseite des Dekormaterials austritt. Hierdurch kann eine besonders ansprechende Beleuchtung erzielt werden, da die Perforation durch die durch die Folie bewirkte diffusere Beleuchtung flächiger ausgeleuchtet wird und so eine besonders homogene Beleuchtung, bei der sich das Leuchtmuster je nach Blickwinkel ändert, erzielt werden kann.

Die Folie ist ein unter Temperatur- und/oder Druckerhöhung aktivierbarer Klebefilm.

Die Folie kann farblos oder auch farbig sein.

In einer bevorzugten Variante ist die Folie eine latent reaktive Folie, insbesondere ein auf Polyurethan-Basis hergestellter Klebstofffilm mit einer integrierten zweiten Komponente, die bei der Aktivierung auf eine Temperatur T2 und einen Druck p2 mit der ersten Komponente zu reagieren beginnt und damit eine hochfeste Verklebung erzeugt. Die zweite Komponente ist vorzugsweise ein Isocyanat, das vorzugsweise in gekapselter Form vorliegt.

Erfindungsgemäß wird die Perforation mittels eines Lasers eingebracht, wobei zunächst eine Folie auf die Rückseite eines Dekormaterials kaschiert wird und anschließend auf den Verbund aus Dekormaterial und Folie mittels des Lasers eine das Dekormaterial von der Sichtseite bis zur Rückseite vollständig durchquerende Perforation eingebracht wird, ohne dass die Folie perforiert wird. Das Einbringen der Perforation erfolgt vorzugsweise von der Sichtseite des Dekormaterials her.

Als Laser wird ein UV-Laser, vorzugsweise mit einer Emissionswellenlänge zwischen 320 und 400 nm, vorzugsweise zwischen 340 nm und 380 nm und besonders bevorzugt bei 355 nm eingesetzt.

Vorzugsweise wird ein gepulster Laser mit einer Pulsfrequenz von bis zu 120 kHz verwendet.

Erstaunlicherweise wurde festgestellt, dass mittels solch einem Laser zwar die gewünschte exakte Perforation in das Dekormaterial, insbesondere Leder, eingebracht werden kann, dass jedoch keine Perforation der Folie erfolgt und die Folie somit unverletzt "stehen bleibt". Im Ergebnis wird somit eine exakte Perforation durch das gesamte Dekormaterial hindurch bis einschließlich dessen Rückseite erzielt, und die auf der Rückseite klebende Folie, insbesondere die zuvor beschriebene latent reaktive Klebefolie, deckt das entstandene Loch von unten ohne wesentliche Beeinträchtigung des Folienmaterials ab. Nachdem die Folie durch das Lasern nicht perforiert oder wesentlich beschädigt wird, kann sie sowohl das perforierte Dekormaterial stabilisieren, als auch als Diffusor für das Licht der Leuchtvorrichtung dienen.

Der Laserstrahl wird entlang einer bestimmten Bahn über die Sichtseite des Dekormaterials bewegt. Da der Laserstrahl gepulst ist, wird bei der Bewegung des Laserstrahls entlang der Bahn punktweise an den gewünschten Orten Material abgetragen, bis - durch ein mehrfaches Wiederholen des Bewegens des Lasers entlang der Bahn - das Leder an der gewünschten Stelle perforiert ist.

Anschließend wird der Laser abgeschaltet.

Nachdem die Folie eine gewisse Beständigkeit gegenüber der verwendeten Laserstrahlung besitzt, wird sie auch dann, wenn doch Laserpulse auf die Folie auftreffen sollten, nicht oder nur unwesentlich beschädigt.

Eine Beendigung der Bestrahlung des Dekormaterials kann empirisch oder unter Verwendung einer Hohlkammer, wie in der DE 10 2016 105 567 A1 beschrieben, oder mit einem zweiten Laser, wie in der älteren Anmeldung DE 10 2017 107 935 beschrieben, erfolgen.

Dadurch, dass die Rückseite des Dekormaterials mit der Folie verklebt ist oder zunächst verklebt wird und erst dann die Perforationen in das Dekormaterial eingebracht werden, kann kein Klebstoff in die Perforationen eindringen und somit der Strahlengang in der Perforation nicht gestört werden, so dass im Bereich der Perforationen eine optisch ansprechende und reproduzierbare Durch- bzw. Hinterleuchtung erreicht wird.

Erfindungsgemäß ist die Folie vorzugsweise eine klebende Folie, damit sie auf die Rückseite des Dekormaterials geklebt werden kann. In einer ersten bevorzugten Variante ist die Folie mit einem üblichen, nicht reaktiven Schmelzklebstoff beschichtet, beispielsweise auf Polyurethan-Basis.

Die Klebefolie ist eine latent reaktive Klebefolie, d.h. eine Klebefolie, die ein unter Temperatur- und/oder Druckerhöhung aktivierbarer Klebefilm ist. In einer besonders bevorzugten Ausführungsform ist diese unter Einwirkung eines Drucks p2 und/oder unter Temperaturerhöhung auf eine Temperatur T2 endgültig verklebbar oder kaschierbar. Unter diesen "Aktivierungsbedingungen für die endgültige Verklebung", d.h. der Temperaturerhöhung auf eine Temperatur T2 und/oder die Einwirkung eines Drucks p2, ist die Folie sehr klebrig und kann dann auf die Leuchtvorrichtung kaschiert werden und endgültig durchvernetzen.

Besonders bevorzugt erfolgt die Aktivierung durch Temperaturerhöhung auf T2 und Druckerhöhung auf p2.

Unterhalb der "Aktivierungsbedingungen für die endgültige Verklebung", der Temperatur T2 und dem Druck p2, ist die latent reaktive Klebefolie entweder nicht klebrig, dies ist unterhalb einer Temperatur T1 und unterhalb eines Drucks p1 der Fall. Oberhalb der Temperatur T1 und des Drucks p1, die gemeinsam die "Aktivierungsbedingungen für die Vorfixierung" bilden, ist die Klebefolie etwas klebrig, und zwar so klebrig, dass sie im Rahmen einer Vorfixierung auf die Rückseite des Leders kaschiert werden kann und dort haftet. Nachdem der Klebefilm bei der Temperatur T1 und dem Druck p1 auf das Leder kaschiert ist, kann der Verbund wieder auf Raumtemperatur abgekühlt, das Dekormaterial perforiert und unter Normaldruck gelagert werden.

Im Allgemeinen werden Dekormaterial und Folie vor der Vorfixierung zugeschnitten und erst dann vorfixiert.

Im Allgemeinen kann der Zuschnitt aus perforiertem Dekormaterial und Folie an einem kühlen trockenen Platz über eine längere Zeitdauer von bis zu sechs Monaten gelagert und ggf. transportiert werden, um dann unter Einwirkung einer höheren Temperatur T2 als der Temperatur T1 und /oder einem höheren Druck p2 als dem Druck p1, nämlich unter den Aktivierungsbedingungen für die endgültige Verklebung, auf die Leuchtvorrichtung geklebt zu werden.

Alternativ wird der Zuschnitt aus Dekormaterial und Folie nach der Vorfixierung abgekühlt und gelagert und die Perforationen in das Dekormaterial erst zu einem späteren Zeitpunkt in den Zuschnitt eingebracht und der Verbund mit dem perforierten Dekormaterial - ggf. mit einer weiteren Zwischenlagerung - unter den Aktivierungsbedingungen T2 und/oder p2 für die endgültige Verklebung - auf die Leuchtvorrichtung aufkaschiert.

Nachdem es möglich ist, die mit der latent reaktiven Klebefolie beschichteten Dekormaterialien über Monate zu lagern und erst zu einem späteren Zeitpunkt unter dem Pressdruck p2 und erhöhter Temperatur T2 zu aktivieren und auf das betreffende Teil, nämlich die Leuchtvorrichtung, zu kaschieren, werden die Anforderungen an die industrielle Serienfertigung erfüllt.

Das auf die Leuchtvorrichtung mittels der Folie kaschierte, perforierte Dekormaterial kann anschließend mit der Unterseite der Leuchtvorrichtung mit einem Trägerelement wie einer Türverkleidung, einem Abstandsgewirke oder einem Schaumstoff verklebt werden.

Die Temperatur T1 für die Vorfixierung, d. h. die Temperatur, bei der die Folie etwas klebrig ist und vorfixiert werden kann, liegt im Allgemeinen unterhalb von 60 °C, vorzugsweise zwischen 40 °C und 55 °C. Je nach verwendeter Klebefolie kann die Temperatur jedoch auch höher oder niedriger sein. Der Druck p1 für die Vorfixierung liegt im Allgemeinen bei bis zu 20 N/cm², vorzugsweise zwischen 10 N/cm² und 20 N/cm², und besonders bevorzugt bei etwa 15 N/cm².

Die Aktivierungstemperatur T2 für die endgültige Verklebung beträgt im Allgemeinen wenigstens 60 °C und vorzugsweise zwischen 70 °C und 110 °C. Bei diesen Temperaturen kann eine optimale nahezu unlösbare Verklebung erreicht werden, ohne dass das Dekormaterial durch den Wärmeeintrag geschädigt wird. Je nach verwendeter Klebefolie kann die Temperatur jedoch auch höher oder niedriger sein.

Der Pressdruck p2 für die Vernetzungsaktivierung (endgültige Verklebung) liegt zwischen 0,5 N/cm² und 25 N/cm² und bevorzugt zwischen 0,5 N/cm² bis 2,0 N/cm², abhängig vom zu verpressenden Material. Diese Pressdrücke sind so hoch, dass sie die Vorfixierung bzw. die Vernetzungsaktivierung ermöglichen, aber so gering, dass das Dekormaterial nicht geschädigt wird.

Nach der Aktivierung muss die Verklebung noch vollständig vernetzen. Im Allgemeinen kann die erforderliche (Nach)Vernetzungszeit durch eine längere Aktivierungszeit reduziert werden.

Im Allgemeinen liegt die Nachvernetzungszeit bei 24 bis 48 Stunden.

Durch die Temperatur- und/oder Druckerhöhung auf T2 und/oder p2 wird auch die im ersten Schritt nur vorfixierte Folie an dem Dekormaterial nun endgültig miteinander verklebt.

Das Dekormaterial ist insbesondere ein flächiges weiches Material wie Leder, Kunstleder, Kunststoff, Alcantara oder auch ein textiles Material. Im Allgemeinen ist das Dekormaterial lichtundurchlässig. Die Schichtdicke des Dekormaterials liegt vorzugsweise zwischen 0,5 mm und 3,0 mm und besonders bevorzugt zwischen 0,8 mm und 2,0 mm.

Grundsätzlich können in dem Dekormaterial die unterschiedlichsten Perforationen eingebracht werden. In einer ersten bevorzugten Ausführungsform sind die Perforationen jeweils mit gleichem Abstand voneinander beabstandet, in einer weiteren bevorzugten Ausführungsform sind die Abstände der Perforationen untereinander unterschiedlich.

Beliebige Formen der Perforationen sind möglich, kreisförmige Perforationen, rechteckige, dreieckige Perforationen, sternförmige Perforationen, quadratische Perforationen, Buchstaben, Logos etc. Je größer die Perforation, desto mehr Licht tritt durch eine Perforation hindurch und desto heller ist die Hinterleuchtung.

Auch verschiedene unterschiedliche Perforationen können kombiniert werden.

Ein hellerer Zentralbereich der Hinterleuchtung kann beispielsweise dadurch erzielt werden, dass die Perforationen im Zentrum größer und/oder mit einem geringeren Abstand voneinander angeordnet sind als im Randbereich.

Im Allgemeinen sollte der Durchmesser einer Perforation zwischen 0,5 mm und 5 mm, vorzugweise zwischen 0,8 mm und 3 mm betragen, um einerseits einen Mindestlichtdurchtritt durch eine Perforation zu erreichen, andererseits jedoch auch die Materialeigenschaften, Optik, Haptik und Flächigkeit des Dekormaterials zu erhalten.

Grundsätzlich weisen die Perforationen eine zylinderförmige Form auf, d.h. die Perforationen erstrecken sich unter einem rechten Winkel zur Oberfläche des Dekormaterials. Hierbei können die Perforationen alle denselben Querschnitt oder einen unterschiedlichen Querschnitt aufweisen.

Die Leuchtvorrichtung umfasst eine Lichtquelle wie beispielsweise eine LED-Lampe. Zudem kann die Leuchtvorrichtung auch einen Lichtleiter, beispielsweise aus Silikon oder einem Kunststoff, einen Lichtdiffusor und einen Reflektor umfassen.

Der Lichtdiffusor, der ein Vlies, ein Abstandgewirke oder ein anderes lichtstreuendes Textil sein kann, ist im Allgemeinen auf der der Dekorschicht abgewandten Seite der Folie angeordnet und sorgt dafür, dass diffuses Licht in die Perforationen eingestrahlt wird.

Auf der anderen Seite des Lichtleiters ist im Allgemeinen ein Reflektor angeordnet, der bewirkt, dass das Licht entlang des Lichtleiters geleitet wird und alle Perforationen erreicht.

Vorzugsweise ist die Folie auf der nach oben weisenden Seite eines Diffusors oder eines transparenten oder semitransparenten Trägers aufgeklebt, der sich wiederum auf oder über der nach oben weisenden Seite des Lichtleiters befindet.

Der Diffusor oder transparente oder semitransparente Träger kann einerseits auf den Lichtleiter aufgeklebt sein.

Vorzugsweise sind jedoch der Lichtleiter und der Diffusor bzw. Träger voneinander durch einen kleinen Spalt getrennt, und Diffusor bzw. Träger und Lichtleiter sind nur an einigen Stellen punktverschweißt. Hierdurch kann eine homogene Bestrahlung der Rückseite des Dekormaterials durch den Lichtleiter erzielt werden.

Durch die Folie kann ebenfalls oder zusätzlich eine Streuung des Lichts bewirkt werden.

Seitlich des Lichtleiters befindet sich eine Lichtquelle, z.B. eine LED-Lampe, deren Licht in den Lichtleiter eingestrahlt wird.

Selbstverständlich können die Komponenten auch anders angeordnet sein.

Die Erfindung wird nachfolgend anhand eines Ausführungsbeispiels näher beschrieben.

Es zeigen:
- Figur 1: eine schematische Ansicht des Schichtaufbaus einer Türverkleidung mit hinterleuchteter Dekorschicht,
- Figur 2: eine vergrößerte Ansicht des Bereichs A aus Figur 1, in der auch die Folie sichtbar ist,
- Figur 3: eine Darstellung des allgemeinen Funktionsprinzips der Hinterleuchtung und
- Figur 4: eine weitere Variante des allgemeinen Funktionsprinzips der Hinterleuchtung mit einem Spalt.

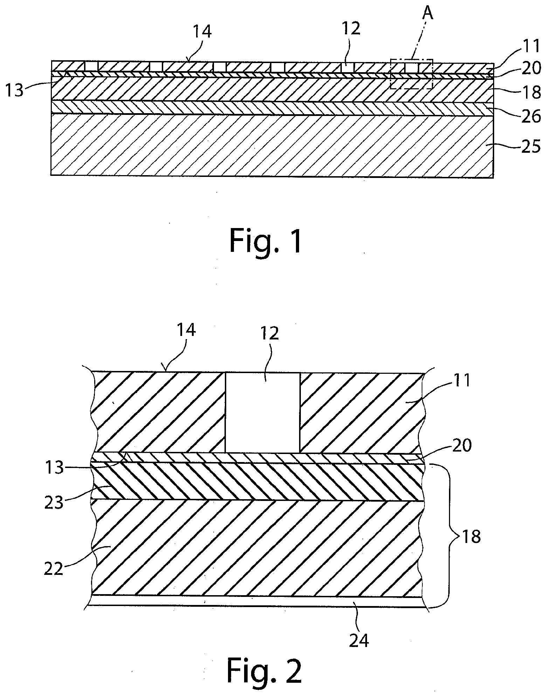

Das Dekormaterial 11 in Figur 1 und 2 weist mit der Sichtseite 14 nach oben in den Fahrzeuginnenraum.

In der vergrößerten Darstellung in Figur 2 erkennt man, dass das Dekormaterial 11 mit seiner Rückseite 13 mit der Folie 20 vollflächig verklebt ist.

Dekormaterial 11 und Folie 20 können vor der Vorfixierung zugeschnitten werden.

Die Folie 20 ist vorzugsweise ein latent reaktiver Klebefilm, der bei einer ersten Temperatur T1 und unter einem ersten Pressdruck p1, die etwa bei 50 °C und 5 N/cm² liegen, in den leicht klebrigen Zustand für die Vorfixierung überführt werden kann. In diesem Zustand wird die Folie 20 mit ihrer in Figur 2 nach oben weisenden Seite mit der Rückseite 13 des Dekormaterials 11 leicht verklebt (vorfixiert). Diese Vorfixierung ist ausreichend, um ein Ablösen der Klebefolie von dem Dekormaterial 11 oder ein Verrutschen bei der Lagerung oder während des Perforierens zu vermeiden.

Als Folie 20 kann beispielsweise die bei H. B. Fuller unter der Bezeichnung Flexee™ EM9002 erhältliche Folie eingesetzt werden, wobei eine Schichtdicke von 100 Mikrometer bevorzugt ist.

Nach der Vorfixierung können in den fixierten Zuschnitt aus Dekormaterial 11 und Folie 20 nun die Perforationen 12 mittels eines UV-Lasers eingebracht werden. Im Rahmen der Erfindung wurde festgestellt, dass mit einem UV-Laser der Wellenlänge von 355 nm eine vollständige Perforation des Leders 11 möglich ist, ohne dass die auf der Rückseite 13 des Leders 11 aufgeklebte Folie 20 ebenfalls perforiert wird. Somit wird mit dem erfindungsgemäßen Verfahren eine selektive Perforation des Leders 11 im Verbund Leder/Folie erreicht. Die Perforationen 12 erstrecken sich dabei durch das Dekormaterial 11, jedoch nicht durch die Folie 20.

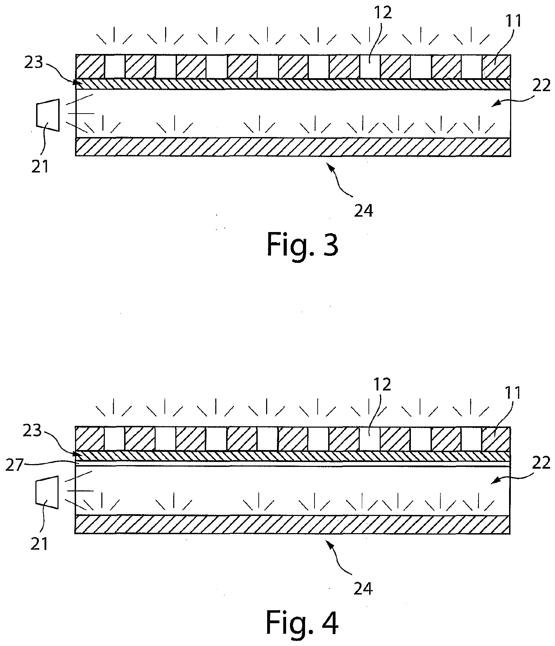

In Figur 1 und 3 sind die Abstände der Perforationen 12 untereinander teilweise verschieden.

Der perforierte Zuschnitt kann dann, ggf. nach einer Lagerung von bis zu sechs Monaten, auf die Aktivierungstemperatur T2 von 75 °C bis 110 °C aktiviert und dann der perforierte Zuschnitt unter einem Pressdruck von 5 bis 20 N/cm² endgültig mit der Leuchtvorrichtung 18 verklebt werden. Hierdurch wird eine feste Klebeverbindung zwischen der Folie 20 und der Leuchtvorrichtung 18 erzielt. Unter den Aktivierungsbedingungen für die endgültige Verklebung wird gleichzeitig auch eine vollständige Vernetzung der durch die Vorfixierung noch unvollständigen Haftung zwischen dem Dekormaterial 11 und der Folie 20 erreicht.

Falls gewünscht, kann anschließend auf die dem Dekormaterial 11 abgewandte Seite der Leuchtvorrichtung 18 noch ein Abstandsgewirke oder Schaumstoff 26 kaschiert werden und der Verbund dann über die Unterseite des Abstandsgewirkes oder Schaumstoffs 26 mit einem Trägerteil 25 einer Türverkleidung verklebt werden. Selbstverständlich kann auch zunächst das Abstandsgewirke 26 mit dem Trägerteil 25 verklebt und dann auf dieses der Verbund aus Dekormaterial 11 / Folie 20 / Leuchtvorrichtung 18 aufgeklebt werden. Ebenfalls kann bei dem Schichtaufbau auch das Abstandsgewirke oder Schaumstoff 26 weggelassen werden.

Die Leuchtvorrichtung 18 umfasst eine Lichtquelle 21 wie eine LED-Lampe, einen flexiblen oder biegesteifen Lichtleiter 22, einen Reflektor 24 und einen Diffusor 23. Der Diffusor 23 ist flächig und kann beispielsweise ein Vlies sein. Er dient dazu, das in der Lichtquelle 21 erzeugte Licht diffus zu machen und so eine gerichtete blendende Lichtstrahlung zu verhindern.

In dieser Variante bildet der Diffusor 23 die obere Außenseite der Leuchtvorrichtung 18. Sofern keine diffuse Hinterleuchtung gewünscht ist, kann der Diffusor 23 auch weggelassen werden.

In der Variante gemäß Figur 3 ist der Diffusor 23 direkt auf den Lichtleiter 22 aufgeklebt.

In der Variante gemäß Figur 4 befindet sich zwischen dem Diffusor 23 und dem Lichtleiter 22 ein Spalt 27, der eine homogenere und gleichmäßigere Bestrahlung als bei dem Aufbau gemäß Figur 3 bewirkt. Der Spalt 27 wird im Allgemeinen dadurch erhalten, dass der Diffusor 23 und der Lichtleiter 22 an einigen Stellen punktverschweißt sind.

Anstelle des Diffusors 23, der beispielsweise ein semitransparenter Träger sein kann, kann auch ein transparenter Träger 25 eingesetzt werden.

## Patentansprüche

1. Flächiges Dekormaterial (11) mit Perforationen (12) für die Innenausstattung, insbesondere für die Automobilindustrie, das dazu dient, auf seiner rückwärtigen Seite (13) mit einer Leuchtvorrichtung (18) beleuchtet zu werden und einen Teil des Lichts der Leuchtvorrichtung (18) von der Rückseite (13) des Dekormaterials (11) durch die Perforationen (12) zur Sichtseite (14) des Dekormaterials (11) hindurchtreten zu lassen, wobei auf der Rückseite (13) des Dekormaterials (11) eine Folie (20) klebt und sich die Perforationen (12) von der Rückseite (13) des Dekormaterials (11) bis zu dessen Sichtseite (14), nicht jedoch durch die Folie (20), erstreckt und die Folie (20) ein unter Temperatur- und/oder Druckerhöhung aktivierbarer Klebefilm ist, **dadurch gekennzeichnet, dass** die wärme- und/oder druckaktivierbare Folie (20) unter den Applikationsbedingungen für die Vorfixierung, nämlich der Erhöhung der Temperatur auf eine Temperatur T1, die geringer als eine Temperatur T2 ist, und/oder einer ersten Druckerhöhung auf einen Druck p1, der geringer als ein Druck p2 ist, auf der Rückseite (13) des Dekormaterials (11) vorkaschiert werden kann und die Folie durch Erhöhung auf die Temperatur T2 bzw. den Druck p2 auf die Leuchtvorrichtung (18) endgültig verklebbar ist.

2. Flächiges Dekormaterial (11) nach Anspruch 1, **dadurch gekennzeichnet, dass** die Folie (20) transparent oder translucent ist.

3. Flächiges Dekormaterial (11) nach einem der vorangegangenen Ansprüche, **dadurch gekennzeichnet, dass** das Dekormaterial ein weiches Dekormaterial und insbesondere Leder, Kunstleder, Alcantara oder ein Textil ist.

4. Flächiges Dekormaterial (11) nach einem der vorangegangenen Ansprüche, **dadurch gekennzeichnet, dass** die Folie (20) direkt auf der Rückseite (13) des Dekormaterials (11) aufgeklebt ist.

5. Flächiges Dekormaterial (11) nach einem der vorangegangenen Ansprüche, **dadurch gekennzeichnet, dass** die Folie (20) ein auf Polyurethan-Basis hergestellter Klebstofffilm ist mit einer integrierten zweiten Komponente, die bei der Aktivierung auf eine Temperatur T2 und einen Druck p2 mit der ersten Komponenten zu reagieren beginnt und damit eine hochfeste Verklebung erzeugt.

6. Flächiges Dekormaterial (11) nach einem der vorangegangenen Ansprüche, **dadurch gekennzeichnet, dass** die Schichtdicke der Folie (20) zwischen 25 und 200 Mikrometer und vorzugsweise zwischen 70 und 130 Mikrometer beträgt.

7. Flächiges Dekormaterial (11) nach einem der vorangegangenen Ansprüche, **dadurch gekennzeichnet, dass** der Abstand zwischen den Perforationen (12) in dem Dekormaterial (11) gleich oder verschieden ist und/oder dass die Perforationen (12) alle dieselbe Form oder unterschiedliche Formen aufweisen und/oder dieselbe Größe oder unterschiedliche Größen und/oder denselben Querschnitt oder einen unterschiedlichen Querschnitt.

8. Flächiges Dekormaterial (11) nach einem der vorangegangenen Ansprüche, **dadurch gekennzeichnet, dass** die Leuchtvorrichtung (18) eine Lichtquelle (21) und einen Lichtleiter (22) und/oder einen Diffusor (23) und/oder einen Reflektor (24) umfasst.

9. Verfahren zur Herstellung eines hinterleuchtbaren Dekormaterials (11), bei dem zunächst eine Folie (20) auf die Rückseite (13) eines flächigen weichen Dekormaterials (11) kaschiert wird und anschließend in den Verbund aus Dekormaterial (11) und Folie (20) mittels eines Lasers eine Vielzahl von Perforationen (12) in das Dekormaterial (11) eingebracht werden, die das Dekormaterial (11) von der Sichtseite bis zur Rückseite (13) vollständig durchdringen, ohne dass die Folie (20) perforiert oder wesentlich beschädigt wird, **dadurch gekennzeichnet, dass** die Folie (20) die entstandenen Perforationen (12) von unten ohne wesentliche Beeinträchtigung des Folienmaterials abdeckt, und der perforierte Verbund anschließend oder nach Lagerung unter Erwärmen auf eine Temperatur T2, die höher als eine Temperatur T1 ist, auf eine Leuchtvorrichtung (18) oder einen transparenten oder translucenten Träger (25) kaschiert wird, wobei die Folie (20) bei der Temperatur T1 vorkaschierbar und bei der Temperatur T2 endgültig verklebbar ist.

10. Verfahren nach Anspruch 9, **dadurch gekennzeichnet, dass** der Laser ein UV-Laser ist, der vorzugsweise Strahlung in einem Wellenlängenbereich zwischen 320 und 400 nm, vorzugsweise zwischen 340 nm und 380 nm und besonders bevorzugt bei 355 nm emittiert.

11. Verfahren nach Anspruch 9 oder 10, **dadurch gekennzeichnet, dass** der Laser ein gepulster Laser, vorzugsweise mit einer Pulsfrequenz von bis zu 120 kHz, ist.

12. Verfahren nach einem der Ansprüche 9 bis 11 zur Herstellung eines flächigen Dekormaterials (11) nach einem der Ansprüche 1 bis 8.

## Claims

1. Planar decorative material (11) having perforations (12), for interior fittings, in particular for the automobile industry, which decorative material serves to be illuminated on the rearward face (13) thereof, by an illumination means (18), and allows a portion of the light from the illumination means (18) to pass from the rear face (13) of the decorative material (11), through the perforations (12), to the visible side (14) of the decorative material (11), wherein a film (20) is adhesively bonded to the rear face (13) of the decorative material (11) and the perforations (12) extend from the rear face (13) of the decorative material (11) as far as the visible side (14) thereof, but not through the film (20) and the film (20) is an adhesive film that is activatable under a temperature and/or pressure increase, **characterized in that** the heat- and/or pressure-activatable film (20) can be pre-laminated onto the rear face (13) of the decorative material (11) under the application conditions for the prefixing, specifically increasing the temperature to a temperature T1 that is less than a temperature T2, and/or a first pressure increase to a pressure p1 that is lower than a pressure p2, and the film can be permanently adhesively bonded onto the illumination means (18) by an increase to the temperature T2 and/or the pressure p2.

2. Planar decorative material (11) according to claim 1, **characterized in that** the film (20) is transparent or translucent.

3. Planar decorative material (11) according to any one of the preceding claims, **characterized in that** the decorative material is a soft decorative material, and in particular leather, artificial leather, alcantara or a textile.

4. Planar decorative material (11) according to any one of the preceding claims, **characterized in that** the film (20) is directly bonded to the rear face (13) of the decorative material (11).

5. Planar decorative material (11) according to any of the preceding claims, **characterized in that** the film (20) is an adhesive film produced on the basis of polyurethane, comprising an integrated second component which begins to react with the first component, and thus achieves high-strength adhesive bonding, in the case of activation at a temperature T2 and a pressure p2.

6. Planar decorative material (11) according to any of the preceding claims, **characterized in that** the layer thickness of the film (20) is between 25 and 200 micrometers, and preferably between 70 and 130 micrometers.

7. Planar decorative material (11) according to any of the preceding claims, **characterized in that** the spacing between the perforations (12) in the decorative material (11) are the same or different, and/or **in that** the perforations (12) are all of the same shape or of different shapes and/or of the same size or different sizes and/or of the same cross section or different cross sections.

8. Planar decorative material (11) according to any of the preceding claims, **characterized in that** the illumination means (18) comprises a light source (21) and an light guide (22) and/or a diffuser (23) and/or a reflector (24).

9. Method for producing a backlit decorative material (11), in which a film (20) is first laminated onto the rear face (13) of a planar soft decorative material (11) and subsequently a plurality of perforations (12) are introduced into the decorative material (11), in the compound structure of decorative material (11) and film (20), by means of a laser, which perforations completely penetrate the decorative material (11) from the visible side as far as the rear face (13) without the film (20) being perforated or substantially damaged, **characterized in that** the film (20) covers the resultant perforations (12) from below without substantially impairing the film material, and the perforated compound structure is subsequently, or following storage, laminated onto an illumination means (18) or a transparent or translucent carrier (25) by means of heating to a temperature T2 that is higher than the temperature T1, wherein the film (20) can be pre-laminated at the temperature T1 and permanently adhesively bonded at the temperature T2.

10. Method according to claim 9, **characterized in that** the laser is a UV laser which preferably emits radiation in a wavelength range of between 320 and 400 nm, preferably between 340 nm and 380 nm, and particularly preferably approximately 355 nm.

11. Method according to either claim 9 or claim 10, **characterized in that** the laser is a pulsed laser, preferably having a pulse frequency of up to 120 kHz.

12. Method according to any one of claims 9 to 11 for producing a planar decorative material (11) according to any one of claims 1 to 8.

## Revendications

1. Matériau de surface décoratif (11) pourvu de perforations (12) pour l'aménagement intérieur, en particulier pour l'industrie automobile, lequel est conçu pour être éclairé sur sa face arrière (13) grâce à un dispositif d'éclairage (18) et pour laisser passer à travers les perforations (12), depuis la face arrière (13) du matériau décoratif (11) vers la face visible (14) dudit matériau décoratif (11), une partie de la lumière du dispositif d'éclairage (18), un film (20) se trouvant collé sur la face arrière (13) du matériau décoratif (11) et les perforations (12) s'étendant de la face arrière (13) du matériau décoratif (11) jusqu'à la face visible (14) de celui-ci sans cependant traverser le film (20), et le film (20) étant un film adhésif pouvant être activé par élévation de température et/ou de pression,
**caractérisé en ce que**
le film (20) activable par la chaleur et/ou la pression peut être prélaminé sur la face arrière (13) du matériau décoratif (11) conformément aux conditions d'application prévues pour le préfixage, à savoir en portant la température à une température T1 qui est inférieure à une température T2, et/ou en élevant la pression à une première pression p1 qui est inférieure à une pression p2, et le film peut être collé de manière définitive sur le dispositif d'éclairage (18) en portant la température à la température T2 et/ou en élevant la pression à la pression p2.

2. Matériau de surface décoratif (11) selon la revendication 1, **caractérisé en ce que** le film (20) est transparent ou translucide.

3. Matériau de surface décoratif (11) selon l'une quelconque des revendications précédentes, **caractérisé en ce que** le matériau décoratif est un matériau décoratif doux au toucher, et est en particulier du cuir, du similicuir, de l'Alcantara ou un textile.

4. Matériau de surface décoratif (11) selon l'une quelconque des revendications précédentes, **caractérisé en ce que** le film (20) est collé directement sur la face arrière (13) du matériau décoratif (11).

5. Matériau de surface décoratif (11) selon l'une quelconque des revendications précédentes, **caractérisé en ce que** le film (20) est un film adhésif fabriqué à base de polyuréthane, présentant un deuxième composant intégré qui, activé à une température T2 et à une pression p2, commence à réagir avec le premier composant et réalise ainsi un collage à haute résistance.

6. Matériau de surface décoratif (11) selon l'une quelconque des revendications précédentes, **caractérisé en ce que** l'épaisseur de couche du film (20) est comprise entre 25 et 200 micromètres, et de préférence entre 70 et 130 micromètres.

7. Matériau de surface décoratif (11) selon l'une quelconque des revendications précédentes, **caractérisé en ce que** l'intervalle entre les perforations (12) réalisées dans le matériau décoratif (11) est identique ou différent et/ou que les perforations (12) présentent toutes la même forme ou sont de formes différentes, et/ou présentent la même grandeur ou sont de grandeurs différentes, et/ou présentent la même section transversale ou sont de sections transversales différentes.

8. Matériau de surface décoratif (11) selon l'une quelconque des revendications précédentes, **caractérisé en ce que** le dispositif d'éclairage (18) comprend une source lumineuse (21) et un guide optique (22) et/ou un diffuseur (23) et/ou un réflecteur (24).

9. Procédé destiné à fabriquer un matériau décoratif (11) rétroéclairable, lors duquel un film (20) est tout d'abord laminé sur la face arrière (13) d'un matériau de surface décoratif (11) doux au toucher et ensuite, une fois obtenu le composite constitué du matériau décoratif (11) et du film (20), une pluralité de perforations (12) est réalisée au moyen d'un laser dans le matériau décoratif (11), lesquelles traversent entièrement ledit matériau décoratif (11) depuis la face visible jusqu'à la face arrière (13) sans cependant que le film (20) soit perforé ou sensiblement endommagé,
**caractérisé en ce que**
le film (20) recouvre par le bas les perforations (12) réalisées sans altération sensible du matériau du film et le composite perforé est, dans une étape suivante ou après stockage, laminé sur un dispositif d'éclairage (18) ou un support (25) transparent ou translucide en portant la température à une température T2 qui est supérieure à une température T1, le film (20) pouvant être prélaminé à la température T1 et être collé de manière définitive à la température T2.

10. Procédé selon la revendication 9, **caractérisé en ce que** le laser est un laser UV qui émet de préférence un rayonnement situé dans une gamme de longueurs d'onde comprise entre 320 et 400 nm, de préférence entre 340 nm et 380 nm, et étant de manière particulièrement privilégiée de 355 nm.

11. Procédé selon la revendication 9 ou 10, **caractérisé en ce que** le laser est un laser pulsé, de préférence avec une fréquence d'impulsions allant jusqu'à 120 kHz.

12. Procédé selon l'une quelconque des revendications 9 à 11 permettant de fabriquer un matériau de surface décoratif (11) selon l'une quelconque des revendications 1 à 8.
